**Europäisches Patentamt**

**European Patent Office**

**Office européen des brevets**

(11) Veröffentlichungsnummer : **0 518 852 A1**

(12) **EUROPÄISCHE PATENTANMELDUNG**

(21) Anmeldenummer : **92890139.6**

(22) Anmeldetag : **11.06.92**

(51) Int. Cl.$^5$ : **F25B 30/06, F24J 3/08**

(30) Priorität : **14.06.91 AT 1200/91**

(43) Veröffentlichungstag der Anmeldung :
**16.12.92 Patentblatt 92/51**

(84) Benannte Vertragsstaaten :
**BE CH DE DK FR GB IT LI NL**

(71) Anmelder : **Ochsner, Karl, Dipl.-Ing.**
**Krackowizerstrasse 4**
**A-4020 Linz (AT)**

(72) Erfinder : **Ochsner, Karl, Dipl.-Ing.**
**Krackowizerstrasse 4**
**A-4020 Linz (AT)**

(74) Vertreter : **Hübscher, Heiner, Dipl.-Ing. et al**
**Spittelwiese 7**
**A-4020 Linz (AT)**

(54) **Wärmepumpe.**

㊾    Eine Wärmepumpe mit einem Direktverdampferkreislauf weist eine den Verdampfer bildende
Rohrleitung (1) auf, die unmittelbar im Einflußbereich des als Wärmequelle genutzten Umweltenergieträgers verlegt ist.
   Um hier die Gefahr einer Kältemittelleckage
zu bannen, verläuft die Verdampfer-Rohrleitung
(1) innerhalb eines Schutzrohres (2), das mit
einer umweltfreundlichen Flüssigkeit (3) gefüllt
und über eine Kontrolleitung (4) an eine ein
Anzeigegerät aufweisende Sicherheitseinrichtung (5) angeschlossen ist.

Die Erfindung bezieht sich auf eine Wärmepumpe mit einem Direktverdampferkreislauf, wobei die den Verdampfer bildende Rohrleitung unmittelbar im Einflußbereich des als Wärmequelle genutzten Umweltenergieträgers, vorzugsweise in Form eines Erdkollektors oder einer Erdsonde zur Nutzung der Erdwärme, verlegt ist.

Um bei Wärmepumpen den Bauaufwand zu senken und gleichzeitig den Wirkungsgrad zu erhöhen, wurde bereits vorgeschlagen, statt mit einem dem Kältemittelkreislauf vorgeordneten Primärkreis zur Aufnahme der Umweltwärme, die dann vom Primärkreis über einen Wärmetauscher als Verdampfer dem Kältemittelkreislauf zugeführt wird, nur mehr mit einem Kreislauf je Pumpeneinheit, einem Direktverdampferkreislauf, zu arbeiten, in dem Kältemittel als Trägermedium zirkuliert. Da im Regelfalle Erdwärme als Energiequelle genutzt wird, sind die den Verdampfer bildenden Rohrleitungen meist als Erdkollektoren oder Erdsonden ausgebildet, sie können aber selbstverständlich auch zur Nutzung von Wasser oder Luft als Umweltenergieträger in anderer Ausgestaltung vorliegen.

Durch die Direktbeaufschlagung der Verdampferrohrleitung mit Kältemittel ist es notwendig, ein Entweichen dieses Kältemittels aus der Rohrleitung sicher zu verhindern, wozu bisher kunststoffummantelte Kupferrohre für die Rohrleitung Verwendung finden. Der das Kupferrohr umhüllende Kunststoffmantel schützt das Rohr vor Korrosion u. dgl. und schließt ein Leckwerden der Rohrleitung praktisch aus. Allerdings gibt es hie und da dennoch Bedenken gegen die Installation eines Direktverdampfers, da es wegen der im Kältemittel enthaltenen Ölspuren auch bei ungiftigen und wärmebedingt aus dem Boden gasförmig flüchtenden Kältemitteln zu einer Verunreinigung des Bodens käme, sollte doch eine Kältemittelleckage auftreten.

Gemäß der EP-A1-0 166 255 wurde bei Wasser-Wasser-Wärmepumpen mit einem Kältemittel-Verdampfer zwar bereits vorgeschlagen, zwischen Wasser und Kältemittel einen Schutzraum zu schaffen, der mit hochgespanntem Gas als Sperrmittel gefüllt ist, doch geht es hier darum, den Eintritt von Wasser in das Kältemittel zu unterbinden, um die Wärmepumpe nicht unbrauchbar zu machen. Sollte nun die Kältemittelleitung leck werden, dringt das Sperrmittel in das Kältemittel ein und der entstehende Druckverlust erlaubt über eine Signaleinrichtung die Feststellung dieses Leckwerdens der Kältemittelleitung. Wegen der auf Grund des gasförmigen Sperrmittels trägen Störfallanzeige und der fehlende Entsorgungsmöglichkeit eines Kältemittelaustrittes eignet sich eine solche Schutzmaßnahme allerdings ni8cht zum gewünschten sicheren Schutz der Umwelt vor Verunreinigungen.

Der Erfindung liegt daher die Aufgabe zugrunde, diese Mängel zu beseitigen und eine Wärmepumpe der eingangs geschilderten Art zu schaffen, die bei einwandfreier Arbeitsweise im Direktverdampferverfahren einen vollständigen und auch kontrollierbaren Schutz vor einer Kältemitelleckage gewährleistet und damit auch alle Bedenken hinsichtlich einer möglichen Verunreinigung des Erdreichs oder eines anderen Umweltenergieträgers über die Verdampferrohrleitungen auszuräumen erlaubt.

Die Erfindung löst diese Aufgabe dadurch, daß die Verdampfer-Rohrleitung innerhalb eines Schutzrohres verläuft, das mit einer umweltfreundlichen Flüssigkeit gefüllt und über eine Kontrolleitung an eine ein Anzeigegerät, z. B. ein Druck-, Durchfluß- oder Flüssigkeitsanzeigegerät od. dgl., aufweisende Sicherheitseinrichtung angeschlossen ist. Dieses beiderends dicht abgeschlossene Schutzrohr umgibt die Verdampfer-Rohrleitung im gefährdeten Bereich und ist auf den Druck auszulegen, der maximal bei einem Leckwerden der Rohrleitung auftreten kann, wobei der verwendete Werkstoff an sich keine Rolle spielt. Durch die Flüssigkeitsfüllung des Schutzrohres bleibt der Wärmeübergang vom umgebenden Energieträger zum Kältemittel innerhalb der Rohrleitung im wesentlichen unbeeinträchtigt und es ergibt sich zusätzlich die gewünschte Kontrollmöglichkeit. Sobald nämlich auf Grund einer Leckage Kältemittel austritt, vergrößert sich der Flüssigkeitsdruck im Schutzrohr bzw. dessen Füllstand, wodurch sich mit geeigneten Anzeigegeräten sofort Zustandsänderungen anzeigen und geeignete Gegenmaßnahmen einleiten lassen. Das Schutzrohr ist mit einer ökologisch unbedenklichen, vorzugsweise lebensmittelechten Flüssigkeit gefüllt, so daß auch ein eventuelles Austreten dieser Flüssigkeit aus dem Schutzrohr zu keiner Umweltbelastung führt, und es entsteht ein in sich geschlossenes, eine gegebenenfalls auftretende Leckage sofort erfassendes Sicherheitssystem. Die dazu erforderlichen Anzeigegeräte können beliebig ausgestaltet sein, sie müssen nur auf eine entsprechende Drucksteigerung bzw. Füllstandsänderung geeignet reagieren.

Das Schutzrohr kann als eigenständiges Rohrgehäuse auf die Rohrleitung aufgezogen sein, günstigerweise kann die Rohrleitung aber aus einem Doppelmantelrohr bestehen, dessen Außenrohr das Schutzrohr bildet, was den Herstellungsaufwand wesentlich vereinfacht.

Besonders vorteilhaft ist es, wenn die Kontrolleitung in einen Auffangbehälter mündet, da so bei Auftreten einer Kältemittellekage das ausströmende Medium nach Überschreiten einer durch ein Überdruckventil oder einen Überlauf od. dgl. definierbaren Toleranzgrenze sofort in den Auffangbehälter abgeleitet werden kann, was nicht nur die Sicherheit weiter erhöht, sondern auch die Entsorgung des austretenden Mediums vereinfacht.

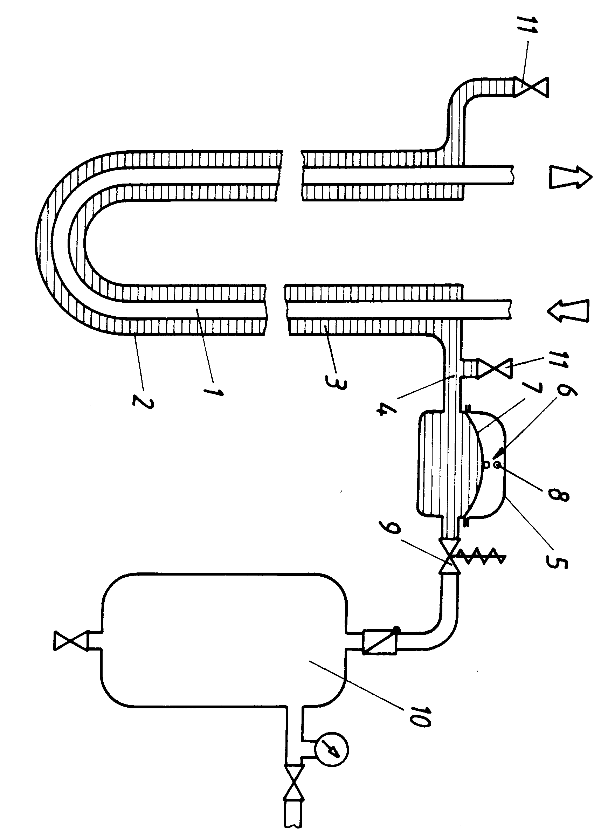

In der Zeichnung ist der Erfindungsgegenstand beispielsweise an Hand eines Verdampferschemas einer erfindungsgemäßen Wärmepumpe näher veranschaulicht.

Der Direktverdampferkreislauf einer nicht weiter dargestellten Wärmepumpe umfaßt eine als Erdsonde oder Erdschlange ausgebildete Rohrleitung 1, die unter Nutzung der Erdwärme als Direktverdampfer für das die Rohrleitung 1 durchströmende Kältemittel dient. Um dabei jede Gefahr einer Kältemittelleckage und damit einer möglichen Kontaminierung des Erdreichs zu vermeiden, verläuft die Rohrleitung 1 zumindest im Verdampferbereich innerhalb eines Schutzrohres 2, das beiderends dicht abgeschlossen und mit einer unbedenklichen Flüssigkeit 3 gefüllt ist. Eine Kontrolleitung 4 verbindet das Schutzrohr 2 mit einer Sicherheitseinrichtung 5, die ein nur angedeutetes Druckanzeigegerät 6 umfaßt. Das Druckanzeigegerät 6 besteht beispielsweise aus einer von der Flüssigkeit 3 beaufschlagten Membran 7 und einem Warnkontakt 8, so daß bei einer Drucksteigerung die sich hochwölbende Membran 7 ein Warnsignal und/oder weitere Schutzmaßnahmen aktiviert.

Die Kontrolleitung 4 führt nach der Sicherheitseinrichtung 5 über ein Überdruckventil 9 und mündet in einen Auffangbehälter 10.

Sollte es nun wider Erwarten zu einer Leckstelle in der Rohrleitung 1 kommen und eine Kältemittelleckage auftreten, verhindert das Schutzrohr 2 ein Eindringen des Kältemittels in das umgebende Erdreich od. dgl.. Außerdem erhöht sich auf Grund des austretenden Kältemittels der Druck im Flüssigkeitspolster des Schutzrohres 2 und aktiviert die Sicherheitseinrichtung, so daß sofort nach dem Auftreten der Leckage der Schadensfall angezeigt und die Wärmepumpe abgeschaltet oder andere Vorsichtsmaßnahmen getroffen werden können. Ist dann die durch das Überdruckventil 9 eingestellte Toleranzgrenze überschritten, öffnet das Ventil und die Flüssigkeit 3 zusammen mit dem ausgetretenen Kältemittel wird in den Auffangbehälter 10 abgeleitet, von wo es sich dann gefahrlos entsorgen läßt. Anschlußventile 11 beiderends des Schutzrohres 2 erlauben eine einfache Befüllung des Schutzrohres 2 oder auch dessen Säuberung und Entleerung, so daß auf rationelle Weise ein zuverlässiges Schutzsystem für die Rohrleitung 1 des Direktverdampferkreislaufes einer Wärmepumpe entsteht, ohne wegen der für einen entsprechenden Wärmeübergang vom Schutzrohr 2 zur Rohrleitung 1 sorgenden Flüssigkeit 3 Wirkungsverluste in Kauf nehmen zu müssen.

**Patentansprüche**

1. Wärmepumpe mit einem Direktverdampferkreislauf, wobei die den Verdampfer bildende Rohrleitung (1) unmittelbar im Einflußbereich des als Wärmequelle genutzten Umweltenergieträgers, vorzugsweise in Form eines Erdkollektors oder einer Erdsonde zur Nutzung der Erdwärme, verlegt ist, dadurch gekennzeichnet, daß die Verdampfer-Rohrleitung (1) innerhalb eines Schutzrohres (2) verläuft, das mit einer umweltfreundlichen Flüssigkeit (3) gefüllt und über eine Kontrolleitung (4) an eine ein Anzeigegerät, z. B. ein Druck-, Durchfluß- oder Flüssigkeitsanzeigegerät (6) od. dgl., aufweisende Sicherheitseinrichtung (5) angeschlossen ist.

2. Wärempumpe nach Anspruch 1, dadurch gekennzeichnet, daß die Rohrleitung aus einem Doppelmantelrohr besteht, dessen Außenrohr das Schutzrohr bildet.

3. Wärmepumpe nach Anspruch 1 oder 2, dadurch gekennzeichnet, daß die Kontrolleitung (4) in einen Auffangbehälter (10) mündet.

EP 0 518 852 A1

**Europäisches Patentamt**

# EUROPÄISCHER RECHERCHENBERICHT

Nummer der Anmeldung

EP    92 89 0139

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 148 862 (WESSA)<br>* Seite 4, Absatz 2 - Seite 5, Absatz 1 *<br>* Seite 7, Absatz 4 - Seite 8, Absatz 2;<br>Abbildungen 1-2 *<br>--- | 1,2 | F25B30/06<br>F24J3/08 |
| Y | FR-A-1 499 286 (HACKETHAL-DRAHT- UND KABEL-WERKE )<br>* Seite 3, linke Spalte, Absatz 5 - rechte Spalte, letzter Absatz; Abbildungen 1-7 *<br>--- | 1,2 | |
| A | DE-A-2 757 061 (JOERGENSEN)<br>* Seite 4, letzter Absatz - Seite 8, letzter Absatz; Abbildungen 1-2 *<br>--- | 1-3 | |
| A | EP-A-0 017 846 (DIER)<br>* Seite 3, Zeile 28 - Seite 5, Zeile 29;<br>Abbildungen 1-8 *<br>--- | 1-3 | |
| A | US-A-1 794 483 (SHEPHERD)<br>* Seite 1, Zeile 41 - Seite 2, Zeile 31;<br>Abbildungen 1-4 *<br>--- | 1,2 | |
| A | DE-A-3 900 551 (SCHMIDHUBER)<br>* Spalte 2, Zeile 45 - Spalte 4, Zeile 8;<br>Abbildungen 1-4 *<br>--- | 1,2 | RECHERCHIERTE SACHGEBIETE (Int. Cl.5)<br><br>F25B<br>F24J<br>F28F<br>F28D<br>F25D |
| A | DE-A-1 601 325 (SCHANTZ)<br>--- | | |
| A | US-A-4 516 629 (BINGHAM)<br>--- | | |
| A | DE-A-2 822 149 (HINRICHSEN)<br>--- | | |
| A | GB-A-732 204 (FARRER)<br>--- | | |
| A | DE-A-2 459 275 (TRANSFORMATOREN UNION)<br><br>----- | | |

Der vorliegende Recherchenbericht wurde für alle Patentansprüche erstellt

| Recherchenort | Abschlußdatum der Recherche | Prüfer |
|---|---|---|
| DEN HAAG | 15 SEPTEMBER 1992 | BOETS A.F.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)